# EUROPEAN PATENT APPLICATION

(11) **EP 3 364 161 A1**
(43) Date of publication of application: **22.08.2018**
(21) Application number: 17156844.7
(22) Date of filing: 20.02.2017
(51) Int. Cl.: G01J 3/04, G02B 27/10, G01J 3/10, G01J 3/06

(54) **TUNABLE LIGHT SOURCE**

(71) Applicant: Instrument Systems Optische Messtechnik GmbH, 81673 Munich (DE)
(72) Inventor: ESTERMANN, Markus, 83547 Babensham (DE); FRANK, Felix, 81667 München (DE); KAPPEL, Christoph, 85609 Aschheim (DE); DOTZLER, Christian, 82065 Baierbrunn (DE); GREAVES, Corin Michael Ricardo, 80336 München (DE); MATHEW, Mithran, Los Altos. CA 94024 (US)
(74) Representative: Röther, Peter

(57) **Abstract**

The invention relates to an apparatus for generating light, comprising
- a plurality of light sources (1),
- a control device (2), which drives the light sources,
- a superimposition optical unit (4, 5, 6), which superimposes the light emitted by the light sources (1) in an exit opening (3),
whereby the superimposition optical unit at least comprises a diffractive element (5). The apparatus is characterized in that the light beam transmitted from the diffractive element (5) to the exit opening (3) and a slit of the exit opening are laterally moveable relative to each other.

## Description

The invention relates to an apparatus for generating light, comprising
- a plurality of light sources,
- a control device, which drives the light sources,
- a superimposition optical unit, which superimposes the light emitted by the light sources in an exit opening, whereby the superimposition optical unit at least comprises a diffractive element for the transmission of a definite spectral distribution of the light to the exit opening.

Such an apparatus provides a (step wise) spectrally tunable light source having the following properties:
- High purity of the spectral light components (little scattered light in the case of undesired spectral components);
- fast tunability in the range of a few milliseconds to seconds;
- high spectral power density.

Preferred is the use of the optical set-up of a spectrograph of the Czerny-Turner type as superimposition optical unit. Said spectrograph is operated "inversely" i.e. not for the spatial separation of spectral components superimposed in an input light beam, but rather for the superimposition of the light of the light sources, said light being emitted at different locations, i.e. spatially separated, with the light beam leaving the apparatus through the exit opening. The detector used in conventional Czerny-Turner spectrographs for detecting the spatially separate radiation components is replaced according to the invention by the arrangement of the light sources in the focal plane of a first concave mirror. The spectral components contained in the emitted light are then selected according to the spatial position at which the light source is situated, and are superimposed in the exit opening. The apparatus makes use of the fact that a very high suppression of scattered light of approximately four orders of magnitude can be produced with the Czerny-Turner arrangement.

As said above the known apparatus is tunable with respect to the wave length and the band width of the transmitted light only in discrete steps.

It is an object of the invention, to provide an apparatus which is continuously tunable, or which at least reduces the wave length increment associated with the step wise tunability.

This object is achieved by the invention in that the light beam transmitted from the diffractive element to the exit opening and a slit of the exit opening are laterally movable relative to one another.

The spectral/spatial distribution of the light coming from the diffractive element is broader than the spectral distribution of the light passing the slit of the exit opening. The slit is cutting out a portion from the spectrum of the light beam directed towards the exit opening.

The central wave-length of the transmitted light can be tuned (quasi-) continuously (dependent on the width of the spectrum of the incoming light) advantageously either by shifting of the light beam coming from the diffractive element or by laterally moving the slit of the exit opening according to the invention.

For the shifting of the light beam, a plane parallel glass plate may be provided which is rotatably positioned between the diffractive optics and the exit opening.

Since the shift range is determined by the combination of the rotation angle and the material and the thickness of the glass plate, the shift is adaptable to the specific requirements in a simple manner.

A further possibility for shifting the light beam is tilting of the second concave mirror or the grating of the superimposition optical unit.

For moving the slit of the exit opening at least one linear actuator may be provided. A second linear actuator may be provided for varying the width of the slit of the exit opening.

The light is then directed to the target surface (for example an end of an optical fiber) by means of appropriate optical elements. So the central wave-length and the spectral band width can be adjusted without influencing the total output of the apparatus.

The advantages of the invention are:
The basic system of the utilized monochromator is unchanged so that only one movable part (plane parallel glass plate) and/or the linear actuators have to be added.

The technical realization of the wave length tunability is very simple and robust as compared to known methods. The increment of the wave length tunability can be significantly reduced by the invention (by a factor of 2 - 100) vis-à-vis a solution that operates without the relative movability of the light beam and the exit slit. The apparatus of the invention enables quasi-continuous tuning of the wave length. Further advantages of the invention are the rugged design possible due to the small scanning range by the mechanical tuner and the fast tuning by electronic switching of the light sources.

In one preferred configuration, the light sources are arranged alongside one another in a linear fashion. The light sources may also be arranged alongside one another and one above another in a matrix-shaped fashion. As a result, it is possible to increase the effective spatial density of the light sources in the focal plane. It is thus possible to improve the spectral tunability and at the same time to increase the radiation power in the respective wavelength range.

In order to increase the spatial density, i.e. in order to reduce the distance between the light sources, the light sources may each be connected to an optical fiber, the fiber end of which is situated in the focal plane of the first concave mirror. The fiber ends may be arranged alongside one another and/or one above another with a very small distance between one another which is delimited by the fiber diameter.

The light sources may each comprise one or more light emitting diodes (LEDs). For the output power of the apparatus according to the invention, the spectral power density of the LED is crucial for each wavelength range. Therefore, colored LEDs are advantageous in the blue and red spectral ranges. In the green spectral range, however, white LEDs nowadays have the highest spectral density. The high suppression of scattered light in the Czerny-Turner arrangement of the superimposition optical unit according to the invention is advantageous especially for white LEDs, in which only a small part of the spectrum is used according to the invention.

By virtue of the superimposition optical unit according to the invention, the spectral distribution around the central wavelength is very similar for each spectral component, even though the emission spectra of the LEDs may be very different. By way of example, blue LEDs typically have a much narrower bandwidth than green LEDs. The spectral width may be configured by the design of the superimposition optical unit (slit width of the exit opening, grating dispersion, size of the light emitting area of each light source, etc.).

Preferably, the control device of the apparatus according to the invention is designed to drive individual and/or simultaneously a plurality of light sources in a pulsed fashion with variable pulse duration and/or pulse frequency.

The individual light sources (LEDs) are switched via the electronic control device. In one variant, a single power source is used and respectively one LED or a subgroup of LEDs is excited via a multiplexer. Sufficiently fast switching, i.e. temporally sequential, pulsed energization of individual LEDs or individual groups of LEDs, makes it possible to synthesize an arbitrary spectrum by means of time division multiplexing. In an alternative variant, each LED has a dedicated power source drivable by the control device, such that arbitrary spectra can be synthesized without temporal modulation. As a further alternative, a plurality of power sources may be provided which each supply a defined group of LEDs via a multiplexer. The time division multiplexing can thus be accelerated.

For scanning the spectrum with the apparatus according to the invention it is possible to switch the LEDs of the LED-array one after the other in successive steps whereby after each step the glass plate or the slit or the grating or the concave mirror is moved. By electronically switching the LEDs the spectrum can be scanned particularly fast. The mechanical movement of the glass plate, the slit, the grating, or the mirror is required after each step in which all of the LEDs of the LED-array have been switched on and off one after another. The electronical switching effects a fast but comparatively coarse scan through the whole spectral range. The mechanical movement effects a fine shift of the whole spectrum between each pair of successive coarse scans. A highly resolved spectrum can be measured in a number of successive steps by attributing the correct wavelengths to the individual measurement points.

In a further preferred configuration of the apparatus according to the invention, the light in the exit opening is coupled into an optical fiber. By means of a suitable fiber-optic assembly, the light generated by means of the apparatus according to the invention can be distributed e.g. among different test facilities. By suitable means, the light can be optimized for homogenous illumination, or it can be focused by suitable means.

The use according to the invention of the Czerny-Turner arrangement as superimposition optical unit significantly improves the spectral filtering compared with the prior art. This allows white LEDs to be used as light sources and light having high spectral purity nevertheless to be obtained in the exit opening. A high purity is present according to the invention e.g. if 40 nm away from the maximum emission the spectral luminance (with a spectral resolution of 2-3 nm) is less than 0.01% of the maximum.

One exemplary embodiment of the invention is explained with reference to the drawing, in which:
- Figure 1:: schematically shows the set-up of an apparatus according to the invention (first alternative);
- Figure 2:: shows the set-up according to fig. 1 in a second alternative;
- Figure 3:: shows a block diagram of the control unit of the apparatus;
- Figure 4:: shows a block diagram with superimposition optical unit;
- Figure 5:: shows a diagram of the spectral emission of three LEDs after the superimposition unit.

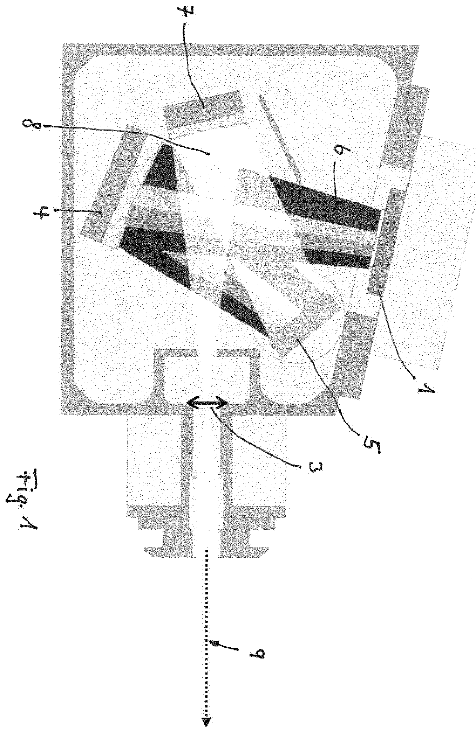

The apparatus illustrated in figures 1 to 4 comprises an array 1 of LEDs as light sources arranged alongside one another in the illustration plane, which differ from one another in parts with regard to the emission spectrum. Colored LEDs are used for the blue and red spectral ranges. White LEDs are used for the green spectral range. It is also possible to use exclusively white LEDs which cover the entire desired spectral range and have a high spectral density.

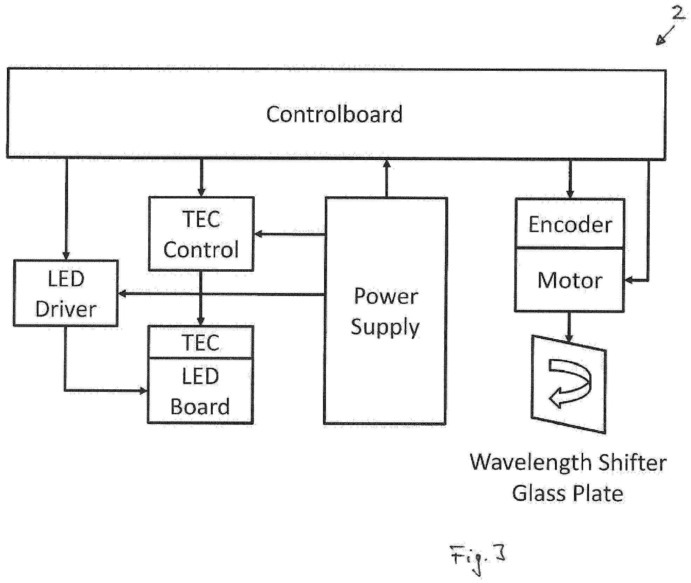

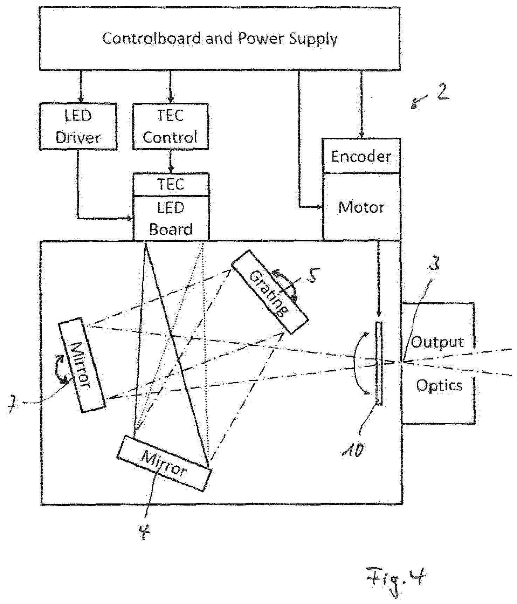

The LED array 1 is driven by an electronic control device 2 shown in fig. 3 and 4.

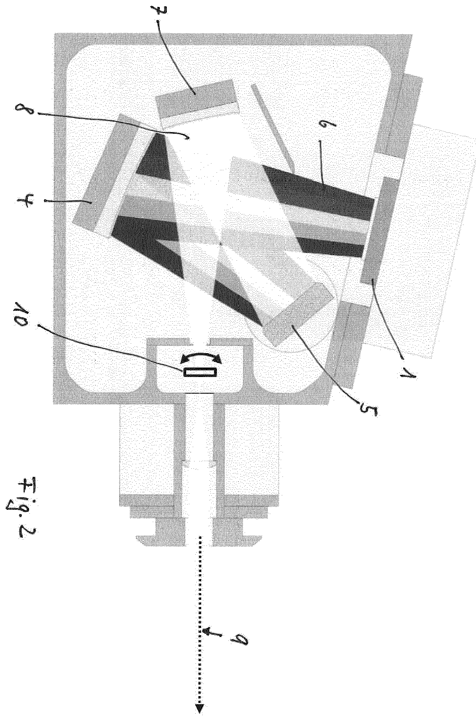

A superimposition optical unit (shown in fig. 4) is provided, which superimposes the light emitted by the LED array 1 in an exit opening 3. The superimposition optical unit comprises a first concave mirror 4, in the focal plane of which the LED array 1 is situated. An optical grating 5 is provided, onto which the first concave mirror 4 reflects the light 6 emitted by the LED array 1. A second concave mirror 7 reflects the light 8 diffracted at the optical grating 5 onto the exit opening 3 situated at the focus of the second concave mirror 7, said exit opening comprising an exit slit. A plane parallel glass plate 10 is arranged directly in front of the exit slit. The glass plate 10 is mounted rotatably about an axis perpendicular to the propagation direction of the light 8 shown in fig. 2). A rotation of the glass plate 10 effects a shifting of the light beam coming from the concave mirror 7.

In an alternative arrangement (shown in fig. 1) two linear actuators are provided for moving the exit slit laterally relative to the light beam and for varying the width of the exit slit.

The rotation of glass plate 10 or the movement of the slit are controlled by control device 2 to obtain the desired wave length of the light leaving the depicted apparatus.

In fig. 4 a further alternative for shifting the light beam is shown. Here the grating is rotatably mounted.

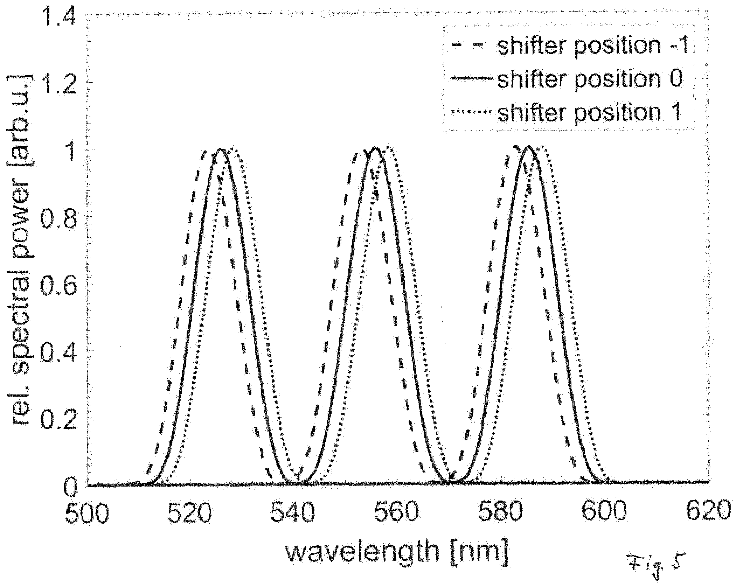

Finally in fig. 5 is shown the spectral emission of three light sources (white LEDs) after the superimposition optical unit. The solid line is at position zero of the rotatably arranged plane parallel glass plate. The dashed and the dotted lines show the spectral emission for two other positions of the rotatably arranged glass plate.

## Claims

1. Apparatus for generating light, comprising
- a plurality of light sources (1),
- a control device (2), which drives the light sources,
- a superimposition optical unit (4, 5, 6), which superimposes the light emitted by the light sources (1) in an exit opening (3),
whereby the superimposition optical unit at least comprises a diffractive element (5),
**characterized in that** the light beam transmitted from the diffractive element (5) to the exit opening (3) and a slit of the exit opening are laterally moveable relative to one another.

2. Apparatus according to claim 1, **characterized in that** the light being transmitted from the diffractive element (5) passes a rotatably arranged plain parallel glass plate (10) positioned in front of the exit opening (3).

3. Apparatus according to claim 1 or 2, **characterized in that** the superimposition optical unit comprises
- a first concave mirror (4), in the focal plane of which the light sources (1) are situated,
- an optical grating (5), onto which the first concave mirror (4) reflects the light (6) emitted by the light sources (1), and
- a second concave mirror (7), which reflects the light (8) diffracted at the optical grating (5) onto the exit opening (3) situated at the focus of the second concave mirror (7).

4. Apparatus according to claim 3, **characterized by** that the grating or the second concave mirror is rotatably mounted.

5. Apparatus according to claim 1, **characterized in that** the slit of the exit opening (3) is laterally moveable.

6. Apparatus according to claim 5, **characterized in that** at least one linear actuator is provided to move the slit laterally.

7. Apparatus according to claim 5 or 6, **characterized in that** two linear actuators are provided to move the slit and to vary the width of the slit.

8. Apparatus according to one of the claims 1 to 7, **characterized in that** two or more of the beam paths of the light emitted by the light sources, of the light reflected onto the optical grating, of the light diffracted at the optical grating and of the light reflected onto the output opening cross one another.

9. Apparatus according to one of the claims 1 to 8, **characterized in that** the light sources are arranged alongside one another in a linear fashion.

10. Apparatus according to one of the claims 1 to 8, **characterized in that** the light sources are arranged alongside one another and one above another in a matrix-shaped fashion.

11. Apparatus according to one of the claims 1 to 10, **characterized in that** the light sources each comprise one or more light emitting diodes.

12. Apparatus according to one of the claims 1 to 11, **characterized in that** the light sources each have an optical fiber, the fiber end of which is situated in the focal plane of the first concave mirror.

13. Apparatus according to one of the claims 1 to 12, **characterized in that** the control device is designed to drive individual and/or simultaneously a plurality of light sources in a pulsed fashion with variable pulse duration and/or pulse frequency.

14. Apparatus according to one of the claims 1 to 13, **characterized in that** one or a plurality of the light sources emit white light.

15. Apparatus according to one of the claims 1 to 14, **characterized in that** one or a plurality of the light sources emit colored light.

16. Apparatus according to one of the claims 1 to 15, **characterized in that** the light in the exit opening is coupled into an optical fiber.

17. Method for scanning the spectrum obtained by the apparatus according to one of the claims 1 to 16 **characterized by** switching the LEDs of the LED-array one after the other in successive steps whereby after each step the glass plate or the slit or the grating or the concave mirror is rotatably moved.
